# EUROPÄISCHE PATENTSCHRIFT

(11) **EP 2 675 763 B1**
(45) Veröffentlichungstag und Bekanntmachung des Hinweises auf die Patenterteilung: **13.12.2017**
(21) Anmeldenummer: 12704707.4
(22) Anmeldetag: 17.02.2012
(51) Int. Cl.: B23K 15/00, B23K 26/32, C03C 8/00, C03C 27/02, H01M 2/24, H01M 2/30, H01M 10/0525, B23K 1/19, H01M 2/08, H01M 10/0569, B23K 101/36, B23K 103/10, C03C 29/00, C03C 3/19, C03C 4/20, C03C 8/24, H01M 2/06

(54) **DURCHFÜHRUNG**
FEED-THROUGH
PASSAGE

(30) Priorität: 18.02.2011 DE 102011011705; 25.02.2011 DE 102011012430; 01.04.2011 DE 102011015869; 10.06.2011 DE 102011103975; 10.06.2011 DE 102011103976; 07.07.2011 DE 102011106873
(43) Veröffentlichungstag der Anmeldung: 25.12.2013
(73) Patentinhaber: Schott AG, 55122 Mainz (DE)
(72) Erfinder: KROLL, Frank, 84036 Landshut (DE); HARTL, Helmut, A-1210 Wien (AT); ROTERS, Andreas, 55118 Mainz (DE); ESEMANN, Hauke, 55286 Woerrstadt (DE); GOEDEKE, Dieter, 65812 Bad Soden (DE); DAHLMANN, Ulf, 55239 Gau-Odernheim (DE); PICHLER-WILHELM, Sabine, 84028 Landshut (DE); LANDENDINGER, Martin, 84061 Ergoldsbach (DE); BACKNAES, Linda, Johanna, 84036 Landshut (DE)
(74) Vertreter: Sawodny, Michael-Wolfgang
(86) Internationale Anmeldenummer: PCT/EP2012/000699
(87) Internationale Veröffentlichungsnummer: WO 2012/110243

(56) Entgegenhaltungen:
- US-A- 5 262 364
- US-A1- 2003 134 194
- DATABASE WPI Week 198431 7. Dezember 1983 (1983-12-07) Thomson Scientific, London, GB; AN 1984-194386 XP002677543, -& SU 1 058 909 A1 (KOSTANYAN K A) 7. Dezember 1983 (1983-12-07)

## Beschreibung

Die Erfindung betrifft eine Durchführung, insbesondere eine Batteriedurchführung, insbesondere für eine Lithium-Ionen-Batterie, bevorzugt einen Lithium-Ionen-Akkumulator, eine Speichereinrichtung, insbesondere eine Batterie, bevorzugt eine Lithium-Ionen-Batterie sowie die Verwendung einer Glaszusammensetzung zur Durchführung eines metallischen Leiters in das Gehäuse einer Batterie, insbesondere einer Lithium-Ionen-Batterie.

Das Einbringen von Leitern, insbesondere in Form von Metallstiften in einen Grundkörper, der aus Leichtmetall wie Aluminium bestand, waren bislang bei Batteriedurchführungen nicht möglich.

Durchführungen mit thermisch sich sehr stark ausdehnenden Materialien wie Aluminium, Aluminiumlegierungen, Kupfer und Kupferlegierungen sind lediglich im Bereich der Hochfrequenzdurchführungen (HF-Durchführung) bekannt geworden. Derartige HF-Durchführungen und Glasmaterialien auf der Basis von AluminiumPhosphat-Gläsern sind beispielsweise aus der US 5,262,364, der US 5,965,469 sowie der US 6,037,539 bekannt geworden.

Insbesondere die US 6,037,539 zeigt eine HF-Durchführung, bei der ein eisenhaltiger bzw. ein nicht eisenhaltiger Leiter in einer Aluminium-Phosphatglas-Zusammensetzung durch ein Gehäuseteil, umfassend Aluminium, hindurchgeführt wird. Die aus der US 6,037,539 bekannte HF-Durchführung ist im Wesentlichen auf den Einsatzzweck optimiert. Bevorzugt werden mit derartigen Durchführungen Frequenzen zwischen 8 und 1000 MHz übertragen. Auch die Hochspannungsanwendung ist in der US 6,037,539 beschrieben. Nicht jedoch sind in der US 6,037,539 Batteriedurchführungen beschrieben.

Als Batterie im Sinne der Erfindung wird sowohl eine Einwegbatterie, die nach ihrer Entladung entsorgt und/oder recycled wird, als auch ein Akkumulator verstanden. Als Material, bevorzugt für Lithium-Ionen-Akkumulatoren werden auch Leichtmetall, insbesondere Aluminium, eine Aluminiumlegierung oder AISiC, diskutiert. Lithium-Ionen-Akkumulatoren sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydrid-Batterien ersetzen.

Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.

Verschiedene Aspekte von Lithium-Ionen-Akkumulatoren sind in einer Vielzahl von Patenten beschrieben. Beispielsweise seien genannt US 961,672, US 5,952,126, US 5,900,183, US 5,874,185, US 5,849,434, US 5,853,914 sowie US 5,773,959.

Insbesondere für die Anwendung von Batterien, bevorzugt Lithium-Ionen-Akkumulatoren in der Automobil-Umgebung müssen eine Vielzahl von Problemen wie Korrosionsbeständigkeit, Beständigkeit bei Unfall oder Schwingungsfestigkeit gelöst werden. Ein weiteres Problem ist die hermetische Dichtheit der Batterie, insbesondere der Lithium-Ionen-Batterie über einen langen Zeitraum. Die Dichtheit beeinträchtigen können z. B. Undichtigkeit im Bereich der Elektroden der Batterie beziehungsweise der Elektrodendurchführung der Batterie, ein Batteriekurzschluss oder Temperaturänderungen, die zu einer verminderten Batterielebensdauer führen. Ein weiteres Problem von Batteriedurchführungen ist die Instabilität gegenüber den aggressiven Batterieelektrolyten, insbesondere gegenüber nicht wässrigen Elektrolyten, wie sie beispielsweise in Lithium-Ionen-Akkumulatoren Verwendung finden.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss ist durch einen Kunststoff isoliert. Nachteilig an den Kunststoffisolierungen ist die limitierte Temperaturbeständigkeit, die unsichere Dichtheit über der Lebensdauer und die geringe chemische Beständigkeit gegenüber den Batterieelektrolyten.

Aus der US 2003/0134194 A1 ist zum Einglasen eines Metallstiftes in eine Batteriedurchführung, insbesondere für eine Lithinium-Ionen-Batterie ein Phosphatglas umfassend
6,0 mol-% B₂O₃
40,0 mol-% P₂O₅
15,0 mol-% Na₂O
18,0 mol-% K₂O
9,0 mol-% PbO
12,0 mol-% Al₂O₃
bekannt geworden.

Die SU 10589909 offenbart ein Phosphatglas mit folgendem Zusammensetzungsbereich:
54,0 - 63,5 mol-% P₂O₅
1,0 - 6,0 mol-% Al₂O₃
5,0 - 15,0 mol-% B₂O₃
3,0 - 9,0 mol-% Na₂O
2,5 - 5,5 mol-% Li₂O
0,3 - 1,0 mol-% CuO
9,0 - 14,0 mol-% BaO
3,0 - 7,0 mol-% K₂O
0,1 - 3,0 mol-% ZrO₂
0,1 - 0,5 mol-% NiO

Aufgabe der Erfindung ist es somit, eine Durchführung, insbesondere eine Batteriedurchführung, anzugeben, die die Probleme des Standes der Technik vermeidet.

Erfindungsgemäß wird dies durch eine Durchführung, insbesondere eine Batteriedurchführung gemäß Anspruch 1, eine elektrische Speichereinrichtung gemäß Anspruch 8 sowie eine Verwendung gemäß Anspruch 12 gelöst.

Vorteilhafte Weiterbildungen der Erfindung sind Gegenstand der Unteransprüche.

Gemäß einem ersten Aspekt der Erfindung wird eine Durchführung, insbesondere eine Batteriedurchführung, insbesondere für eine Lithium-Ionen-Batterie, bevorzugt für einen Lithium-Ionen-Akkumulator angegeben mit einem Grundkörper, wobei der Grundkörper wenigstens eine Öffnung aufweist, durch die ein Leiter, insbesondere ein im Wesentlichen stiftförmiger Leiter in einem Glasmaterial hindurchgeführt wird, wobei der Grundkörper ein niedrig schmelzendes Material, insbesondere ein Leichtmetall, bevorzugt Aluminium oder AlSiC, Aluminiumlegierungen, Magnesium oder Magnesiumlegierungen umfasst. Ebenso möglich und von der Erfindung umfasst sind Grundkörper aus Titan- und/oder Titanlegierungen wie Ti6246 und/oder Ti6242. Titan ist ein körperverträgliches Material, so dass es für medizinische Anwendungen beispielsweise in der Prothetik zum Einsatz kommt. Ebenso wird es wegen der besonderen Festigkeit, Beständigkeit und geringem Gewicht in besonderen Anwendungen gerne verwendet, beispielsweise im Rennsport aber auch für Luft- und Raumfahrtanwendungen.

Weitere Materialien für den Grundkörper und/oder das Batteriegehäuse sind Metalle, insbesondere Stahl, nicht rostender Stahl, Edelstahl oder Werkzeugstahl, der für eine spätere Wärmebehandlung vorgesehen ist. Verwendbar als Edelstähle sind beispielsweise X12CrMoS17, XSCrNi1810, XCrNiS189, X2CrNi1911, X12CrNi177, XSCrNiMo17-12-2, X6CrNiMoTi17-12-2, X6CrNiTi1810 und X15CrNiSi25-20, X10CrNi1808, X2CrNiMo17-12-2, X6CrNiMoTi17-12-2. Um eine besonders gute Verschweißbarkeit sowohl beim Laserschweißen wie auch beim Widerstandsschweißen zur Verfügung stellen zu können, als Material für den Grundkörper und/oder das Gehäuseteil, insbesondere das Batteriezellengehäuse, ganz besonders Edelstähle, insbesondere Cr-Ni-Stähle mit den Werkstoff-Nummern (WNr.) gemäß Euro-Norm (EN) 1.4301, 1.4302, 1.4303, 1.4304, 1.4305, 1.4306, 1.4307 verwandt. Als Normalstahl kann St35, St37 oder St38 verwandt werden.

Erfindungsgemäß umfasst das Glasmaterial, durch das der Leiter hindurchgeführt wird, wenigstens die nachfolgenden Komponenten in mol-%:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 1-5 mol-%, ganz bevorzugt 2-5 mol-% |

Besonders bevorzugt ist eine Zusammensetzung, die nachfolgende Komponenten umfasst:

| | |
|---|---|
| P₂O₅ | 38-50 mol-%, insbesondere 39-48 mol-% |
| Al₂O₃ | 3-14 mol-%, insbesondere 4-12 mol-% |
| B₂O₃ | 4-10 mol-%, insbesondere 5-8 mol-% |
| Na₂O | 10-30 mol-%, insbesondere 14-20 mol-% |
| K₂O | 10-20 mol-%, insbesondere 12-19 mol-%, |
| PbO | 0-10 mol-%., insbesondere 0-9 mol-% |

Bei den angegebenen Glaszusammensetzungen handelt es sich um stabile Phosphatgläser, die einen deutlich niedrigeren Gesamtalkaligehalt als aus dem Stand der Technik bekannte Alkali-Phosphatgläser aufweisen.

Überraschenderweise hat sich gezeigt, dass die erfindungsgemäße Glaszusammensetzung mit einem Li-Anteil von bis zu 45 mol-%, insbesondere bis zu 35 mol-%, kristallisationsstabil sind, d.h. in einem nachgeschalteten Sinterschritt keine störende Kristallisation zeigen . Besonders bevorzugt ist hierbei eine Glaszusammensetzung mit bis zu 35 mol-% Li₂O, die keine wesentliche Kristallisation zeigt.

Durch die in der Regel hohe Kristallisationsstabilität der Phosphatgläser wird sichergestellt, dass das Aufschmelzen der Gläser auch bei Temperaturen < 600° C in der Regel nicht behindert wird. Dies ermöglicht es, die meisten angegebenen Glaszusammensetzungen als Glaslot beziehungsweise Schmelzglas zur Verbindung mit temperaturempfindlichen Materialen und/oder Bauteilen verwenden zu können, da das Aufschmelzen der Glaszusammensetzungen auch bei Temperaturen < 600° C in der Regel nicht behindert wird.

Die angegebenen Glaszusammensetzungen zeichnen sich dadurch aus, dass die Glasmaterialien sehr hohe thermische Dehnungen α im Bereich 20° C bis 300°C aufweisen, die im Bereich von > 14·10⁻⁶/K, insbesondere > 15·10⁻⁶ K, bevorzugt im Bereich 15 ·10⁻⁶/K bis 25 ·10⁻⁶/K liegen und damit in dem Bereich der thermischen Ausdehnung von Leichtmetallen wie Aluminium, aber auch von gängigen Metallen für die Leiter, die durch das Glasmaterial hindurchgeführt werden, nämlich Kupfer. So besitzt Aluminium bei Zimmertemperatur eine thermische Ausdehnung α von 23 x 10⁻⁶/K und Kupfer von 16,5 x 10⁻⁶/K.

Um zu verhindern, dass beim Einglasen das Leichtmetall des Grundkörpers und eventuell auch des Metallstiftes schmilzt oder deformiert, liegt die Verschmelztemperatur des Glasmaterials mit dem Material des Grundkörpers und/oder Leiters unterhalb der Schmelztemperatur des Materials des Grundkörpers bzw. Leiters. Die Verschmelztemperatur der angegebenen Glaszusammensetzungen liegt im Bereich von 350° C bis 650° C. Die Verschmelztemperatur kann beispielsweise über die Halbkugeltemperatur wie in R. Görke, K.-J. Leers: Keram. Z. 48 (1996) 300-305, bzw. nach DIN 51730, ISO 540 oder CEN/TS 15404 und 15370-1 beschrieben, deren Offenbarungsgehalt vollumfänglich in vorliegende Anmeldung mit aufgenommen wird, bestimmt werden. Die Messung der Halbkugeltemperatur ist ausführlich in der DE 10 2009 011 182 A1, deren Offenbarungsgehalt vollumfänglich in vorliegende Anmeldung mit aufgenommen wird, beschrieben. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas beispielsweise in Form eines Glaspulvers aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der so genannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ±20 K von der Halbkugeltemperatur abweichen.

Das Einglasen des Leiters in die Öffnung kann dann wie folgt durchgeführt werden:
Zunächst wird das Glasmaterial zusammen mit dem stiftförmigen Leiter in die Öffnung im Grundkörper eingebracht. Sodann wird das Glas zusammen mit dem Leiter, insbesondere dem stiftförmigen Leiter auf die Verschmelztemperatur bzw. Halbkugeltemperatur des Glases erwärmt, so dass das Glasmaterial erweicht und in der Öffnung den Leiter, insbesondere den stiftförmigen Leiter umschließt und am Grundkörper anliegt. Da die Schmelztemperatur sowohl des Materials des Grundkörpers als auch des Leiters, insbesondere des stiftförmigen Leiters oberhalb der Verschmelztemperatur des Glasmaterials liegt, liegt der Grundkörper wie auch der stiftförmige Leiter im festen Zustand vor. Bevorzugt liegt die Verschmelztemperatur des Glasmaterials 20 bis 150 K unterhalb der Schmelztemperatur des Materials des Grundkörpers bzw. stiftförmigen Leiters. Wird beispielsweise Aluminium als Leichtmetall mit einem Schmelzpunkt von T_{SCHMELZ} = 660,32° C verwendet, so liegt die Verschmelztemperatur bzw. Lottemperatur des Glasmaterials im Bereich 350° C bis 640° C, bevorzugt im Bereich 350° C bis 600° C besonders bevorzugt im Bereich 350°C bis < 550°C, insbesondere im Bereich 450°C bis < 550°C. Alternativ zu einem Leichtmetall wie z. B. Aluminium oder eine Aluminiumlegierung könnte als Material für den Grundkörper auch eine SiC Matrix eingesetzt werden, die mit Al infiltriert ist. Ein derartiges Material wird auch als AlSiC bezeichnet. AlSiC weist einen SiC-Kern auf, in den Al eindiffundiert ist. Durch den Anteil des Al können die Eigenschaften, insbesondere der Ausdehnungskoeffizient, eingestellt werden. Insbesondere hat AlSiC eine niedrigere Wärmeausdehnung als reines Aluminium.

Andere Materialien, die Verwendung für den Grundkörper und/oder das Batteriegehäuse finden können, sind beispielsweise, Magnesium oder Magnesiumlegierungen. Für den Grundkörper sind auch Titan oder Titanlegierungen möglich. Auch Metalle, insbesondere Stahl, nicht rostender Stahl, Edelstahl oder Werkzeugstahl wären mögliche Materialien.

Das Material des Leiters, insbesondere des stiftförmigen Leiters kann identisch zum Material des Grundkörpers sein, also beispielsweise Aluminium, AlSiC, eine Aluminiumlegierung, Magnesium oder eine Magnesiumlegierung. Dies hat den Vorteil, dass der Ausdehnungskoeffizient von Grundkörper und Metallstift identisch ist. Der Ausdehnungskoeffizient α des Glas- oder Glaskeramikmaterials muss dann nur an ein Material angepasst werden. Des Weiteren kann der Außenleiter die Materialien Edelstahl oder Stahl umfassen. Um für einen derartigen Fall eine Druckglasdurchführung zur Verfügung zu stellen wird α_{Glas} unterschiedlich zu α_{Grundkörper} beziehungsweise α_{Metallstift} gewählt.

Alternativ hierzu kann der stiftförmige Leiter Cu, eine Kupferlegierung, CuSiC oder eine NiFe-Legierung, Silber, eine Silberlegierung, Gold, eine Goldlegierung, eine Kupferseele, d. h. einen NiFe-Mantel mit Kupferinnenteil sowie eine Kobalt-EisenLegierung als Material umfassen.

Als Aluminium bzw. Aluminiumlegierung für den Leiter finden bevorzugt Verwendung:
EN AW-1050 A
EN AW-1350
EN AW-2014
EN AW-3003
EN AW-4032
EN AW-5019
EN AW-5056
EN AW-5083
EN AW-5556A
EN AW-6060
EN AW-6061.

Als Kupfer bzw. Kupferlegierungen für den Leiter finden bevorzugt Verwendung:
Cu-PHC 2.0070
Cu-OF 2.0070
Cu-ETP 2.0065
Cu-HCP 2.0070
Cu-DHP 2.0090

Im Fall, dass der Grundkörper und der Metallstift unterschiedliche Materialien aufweist, gilt beispielsweise α_{Grundkörper} ≥ α_{Glas} ≥ α_{Metallstift}. Die unterschiedlichen Ausdehnungskoeffizienten der Materialien ermöglichen dann eine Druckeinglasung, bei der eine kraftschlüssige Verbindung zwischen Glasmaterial und umgebenden Materialien zur Verfügung gestellt wird.

Die erfindungsgemäße Batteriedurchführung zeichnet sich nicht nur dadurch aus, dass eine Einglasung, insbesondere eine Druckeinglasung, in einen niedrig schmelzenden Grundkörper möglich ist, sondern auch dadurch, dass eine ausreichende Beständigkeit gegenüber dem Batterieelektrolyten gegeben ist.

Insbesondere ist durch die Erfindung eine ausreichende chemische Stabilität gegenüber nicht wässrigen, in der Regel aggressiven Batterie-Elektrolyten, gegeben. Nicht wässrige Batterie-Elektrolyten bestehen typischerweise aus einem Carbonat, insbesondere aus einer Carbonatmischung, wie beispielsweise eine Mischung aus Ethylencarbonat oder Dimethylcarbonat, wobei die aggressiven, nicht wässrigen Batterie-Elektrolyten ein Leitsalz aufweisen, beispielsweise das Leitsalz LiPF₆, z. B. in Form einer 1 molaren Lösung. Überraschenderweise weisen die angegebenen Glaszusammensetzungen neben einem hohen thermischen Ausdehnungskoeffizienten im Bereich von α (20°C - 300°C) > 14·10⁻⁶/K, insbesondere bevorzugt zwischen 15 ·10⁻⁶/K und 25 ·10⁻⁶/K, der niedrigen Verschmelz- bzw. Halbkugeltemperatur auch eine ausreichende Beständigkeit gegenüber den zuvor genannten festen Batterie-Elektrolyten auf.

Die Glaszusammensetzungen für die Batteriedurchführung weisen bevorzugt Li auf, das in die Glasstruktur eingebaut ist. Da Li in dem Elektrolyten, wie er für Li-lonen-Speichereinrichtungen verwandt wird, ebenfalls enthalten ist, wird durch diese Maßnahme die Batterieleistung nicht beeinträchtigt.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bzw. natriumfreie Gläser besonders beständig gegenüber Elektrolyten, insbesondere solchen, wie sie in Li-lonen-Speichereinrichtungen verwandt werden, sind.

Die Beständigkeit der erfindungsgemäßen Zusammensetzung gegenüber den Batterie-Elektrolyten kann dadurch geprüft werden, dass die Glaszusammensetzung in Form eines Glaspulvers mit einer Körnung d50 = 10 µm gemahlen wird und in den Elektrolyten für eine vorbestimmte Zeit, beispielsweise eine Woche, ausgelagert wird. d50 bedeutet, dass 50 % aller Partikel oder Körner des Glaspulvers kleiner oder gleich einem Durchmesser von 10 µm ist. Als nicht wässriger Elektrolyt wird beispielsweise eine Carbonatmischung aus Ethylencarbonat und Dimethylcarbonat im Verhältnis 1:1 mit einem molaren LiPF₆ als Leitsalz verwandt. Nachdem das Glaspulver dem Elektrolyten ausgesetzt war, kann das Glaspulver abfiltriert und der Elektrolyt auf Glasbestandteile, die aus dem Glas ausgelaugt wurden, untersucht werden. Hierbei hat sich herausgestellt, dass bei den verwandten Gläsern gemäß der Erfindung in den beanspruchten Zusammensetzungsbereichen überraschenderweise eine derartige Auslaugung in nur geringem Maß von weniger als 20 Massenprozent vorliegt, in besonderen Fällen auch eine Auslaugung < 5 Massenprozent erreicht wird bei einer thermischen Ausdehnung α im Temperaturbereich von 20° C bis 300°C > 14·10⁶/K, insbesondere zwischen 15 · 10⁻⁶/K und 25 · 10⁻⁶/K. Ein weiterer Vorteil der erfindungsgemäßen Glaszusammensetzung, die bei einer Batteriedurchführung mit einem oder mehreren Stiften, insbesondere aus Aluminium oder einer Aluminiumlegierung, Verwendung findet, ist darin zu sehen, dass ein Verschmelzen des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für AI-Verschmelzungen entgegen dem bisherigen Verfahren nicht notwendig. Vielmehr kann eine derartige Verschmelzung auch unter Luft erfolgen
Für beide Arten der Verschmelzungen kann als Schutzgas N₂ oder Ar benutzt werden. Als Vorbehandlung zum Verschmelzen wird das Metall gereinigt und oder geätzt, wenn nötig gezielt oxidiert oder beschichtet. Während des Prozesses werden Temperaturen zwischen 300 und 600 °C mit Heizraten von 0.1 bis 30 K/min und mit Haltezeiten von 1 bis 60 min verwandt.

Die angegebenen Glaszusammensetzungen zeigen überraschenderweise gleichzeitig eine hohe chemische Stabilität gegenüber dem bevorzugt nicht wässrigen Elektrolyten sowie einen hohen thermischen Ausdehnungskoeffizienten. Dies ist insbesondere deswegen überraschend, da angenommen wird, dass, je höher der thermische Ausdehnungskoeffizient ist, umso instabiler das Glas wird. Es ist daher überraschend, dass trotz des hohen Ausdehnungskoeffizienten und der niedrigen Verschmelztemperatur die angegebenen Glaszusammensetzungen eine ausreichende Stabilität aufweisen.

Auch für Na₂O-Gehalte von bis zu 29 mol-%, insbesondere bis zu 20 mol-% werden sehr beständige Gläser erhalten.

Die angegebene erfindungsgemäße Glaszusammensetzung kann zur Dehnungsanpassung, d.h. zur Anpassung des Ausdehnungskoeffizienten, noch mit Füllstoffen versehen sein.

Um die Glaszusammensetzung einer IR-Erwärmung zugänglich zu machen, können die vorgenannten Gläser mit Dotierstoffen versehen werden, die ein Emissionsmaximum im Bereich von Infrarot-Strahlung, insbesondere IR-Strahlung einer IR-Quelle aufweisen. Beispielhafte Materialien hierfür sind Fe, Cr, Mn, Co, V, Pigmente. Durch die Infrarot-Strahlung kann das so aufbereitete Glasmaterial örtlich gezielt erwärmt werden.

Mit der Erfindung wird eine Batteriedurchführung zur Verfügung gestellt, die sich gegenüber den Durchführungen im Stand der Technik, insbesondere denjenigen mit Kunststoff als Dichtmaterial durch eine hohe Temperaturbeständigkeit, insbesondere Temperaturwechselbeständigkeit auszeichnet. Des Weiteren wird eine hermetische Dichtheit auch bei Temperaturänderung beziehungsweise bei Wechseln der Temperatur zur Verfügung gestellt, die verhindert, dass Flüssigkeit insbesondere Batterieflüssigkeit austreten kann und/oder Feuchtigkeit in das Gehäuse eindringt. Unter hermetischer Dichtheit wird verstanden, dass bei einem Druckunterschied von 1bar die Helium-Leckrate <1·10⁻⁸ mbar ls⁻¹, bevorzugt <1·10⁻⁹ mbar ls⁻¹ liegt.

Des Weiteren weist die Batteriedurchführung eine ausreichende chemische Beständigkeit, insbesondere gegenüber nicht-wässrigen Batterie-Elektrolyten, auf.

Eine Vorbehandlungsmaßnahme, der die Batteriedurchführung unterzogen werden kann, ist das Beizen.

Neben der Durchführung stellt die Erfindung gemäß einem zweiten Aspekt auch eine elektrische Speichereinrichtung, insbesondere eine Batterie, bevorzugt eine Batteriezelle zur Verfügung, die eine erfindungsgemäße Durchführung aufweist. Das Gehäuse besteht bevorzugt aus dem gleichen Material wie der Grundkörper, insbesondere einem Leichtmetall. Der Grundkörper ist bei Batteriezellen bevorzugt Teil des Batteriegehäuses. Bevorzugt handelt es sich bei der Batterie um eine Lithium-lonen-Batterie.

Materialien für das Gehäuse beziehungsweise den Grundkörper sind bevorzugt ebenfalls Metalle, wie Stahl, rostfreier Stahl, Edelstahl, bevorzugt Leichtmetalle, insbesondere Titan, Titanlegierungen, Aluminium, Aluminiumlegierungen, Magnesium oder Magnesiumlegierungen ohne hierauf beschränkt zu sein.

In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise den stiftförmigen Leiter oder das Elektrodenverbindungsbauteil verwandt, so zeichnen sich die Leichtmetalle des Weiteren noch durch eine elektrische Leitfähigkeit im Bereich 5 · 10⁶ Sm⁻¹ bis 50 · 10⁶ Sm⁻¹ aus.

Bei Einsatz in Druckglasdurchführungen liegt zudem noch der Ausdehnungskoeffizient α des Leichtmetalles für den Bereich 20° C bis 300° C im Bereich 18 · 10⁻⁶ /K bis 30 · 10⁻⁶/K

Im Allgemeinen haben Leichtmetalle Schmelztemperaturen im Bereich 350° C bis 800° C.

Die Batterie weist bevorzugt einen nicht-wässrigen Elektrolyten, insbesondere auf Carbonatbasis, bevorzugt eine Carbonatmischung, auf. Die Carbonatmischung kann ein Ethylencarbonat in Mischung mit Dimethylcarbonat mit einem Leitsalz, beispielsweise LiPF₆, umfassen.

Des Weiteren stellt die Erfindung gemäß einem dritten Aspekt ein Glasmaterial umfassend die nachfolgenden Komponenten in mol-%:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 5-20 mol-%, ganz bevorzugt 5-20 mol-% |
| Bi₂O₃ | 1-5 mol-%, ganz bevorzugt 2-5 mol-% |

zur Durchführung eines metallischen Leiters in das Gehäuse einer Speichereinrichtung zur Verfügung.

Besonders bevorzugt ist ein Glasmaterial, umfassend die nachfolgenden Komponenten in mol-%:

| | |
|---|---|
| P₂O₅ | 38-50 mol-%, insbesondere 39-48 mol-% |
| Al₂O₃ | 3-14 mol-%, insbesondere 4-12 mol-% |
| B₂O₃ | 4-10 mol-%, insbesondere 5-8 mol-% |
| Na₂O | 10-30 mol-%, insbesondere 14-20 mol-% |
| K₂O | 10-20 mol-%, insbesondere 12-19 mol-% |
| PbO | 0-10 mol-%, insbesondere 0-9 mol-% |

für eine Durchführung eines metallischen Leiters in das Gehäuse einer Speichereinrichtung, bevorzugt einer Batterie, insbesondere einer Lithium-Ionen-Batterie. In einer bevorzugten Ausgestaltung ist der metallische Leiter der Speichereinrichtung ein Leichtmetall, das insbesondere Aluminium, eine Aluminiumlegierung, Kupfer oder eine Kupferlegierung umfassen kann. Der Grundkörper sowie das Gehäuse kann ebenfalls aus Leichtmetall ausgebildet sein, beispielsweise aus Aluminium oder eine Aluminiumlegierung.

Die Erfindung soll nachfolgend anhand der Figur und der Ausführungsbeispiele ohne Beschränkung hierauf beschrieben werden.

Es zeigen:

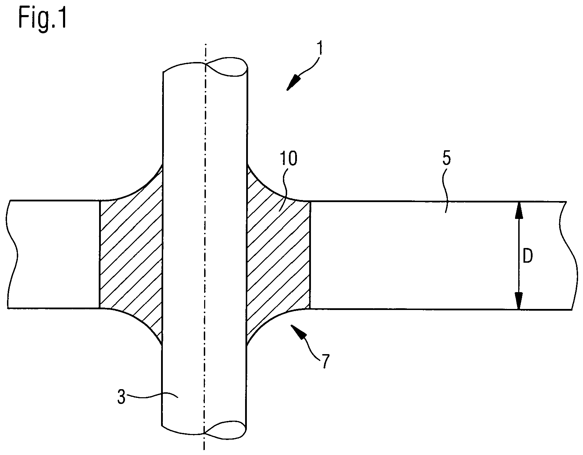

- Fig. 1: eine erfindungsgemäße Durchführung;

In Fig. 1 ist eine Durchführung 1 gemäß der Erfindung gezeigt. Die Durchführung 1 umfasst als Leiter, insbesondere als stiftförmigen Leiter einen Metallstift 3, der bevorzugt aus einem Material, beispielsweise Aluminium einer Aluminiumlegierung, einer Kupferlegierung oder Kupfer, besteht sowie als Grundkörper 5 ein Metallteil , das erfindungsgemäß aus einem niedrig schmelzenden Metall, d.h. einem Leichtmetall, insbesondere Aluminium, einer Aluminiumlegierung, Magnesium, einer Magnesiumlegierung, Titan oder einer Titanlegierung besteht. Der Metallstift 3 wird durch eine Öffnung 7, die durch das Metallteil 5 hindurchgeht, hindurchgeführt. Obwohl nur das Hindurchführen eines einzelnen Metallstiftes durch die Öffnung gezeigt ist, könnten auch mehrere Metallstifte durch die Öffnung hindurchgeführt werden, ohne dass von der Erfindung abgewichen wird.

Die Außenkontur der Öffnung 7 kann bevorzugt rund oder aber auch oval ausgebildet sein. Die Öffnung 7 geht durch die ganze Dicke D des Grundkörpers bzw. Metallteils 5 hindurch. Der Metallstift 1 ist in ein Glasmaterial 10 eingeglast und wird im Glasmaterial 10 durch die Öffnung 7 durch den Grundkörper 5 hindurchgeführt. In den Grundkörper 5 wird die Öffnung 7 durch beispielsweise einen Trennvorgang, bevorzugt Stanzen, eingebracht. Um eine hermetische Durchführung des Metallstiftes 3 durch die Öffnung 7 bereitzustellen, wird der Metallstift 3 in einem Glaspfropfen aus dem erfindungsgemäßen Glasmaterial eingeschmolzen. Ein wesentlicher Vorteil dieser Herstellungsweise besteht darin, dass auch unter erhöhten Belastungen auf den Glaspfropfen, z. B. bei einer Druckbelastung, ein Herausdrücken des Glaspfropfens mit Metallstift aus der Öffnung 7 vermieden wird. Die Verschmelztemperatur des erfindungsgemäßen Glasmaterials mit dem Grundkörper liegt 20 K bis 100 K unterhalb der Schmelztemperatur des Materials des Grundkörpers 5 und/oder des Leiters, insbesondere des stiftförmigen Leiters.

Nachfolgend werden zwei Ausführungsbeispiele, AB7 und AB8, in Tabelle 1 für erfindungsgemäße Glaszusammensetzungen angegeben, die in Tabelle 2 Vergleichsgläsern (VB1 -VB9) gegenübergestellt werden. AB1-AB6 sind nicht erfindungsgemäße Referenzbeispiele.

**Tabelle 1:**

| Beispiele: | | | | | | | | |
|---|---|---|---|---|---|---|---|---|
| | AB1 | AB2 | AB3 | AB4 | AB5 | AB6 | AB7 | AB8 |
| Mol-% | | | | | | | | |
| P₂O₅ | 47.6 | 43.3 | 43.3 | 43.3 | 37.1 | 40.0 | 42,0 | 46,5 |
| B₂O₃ | 7.6 | 4.8 | 4.7 | 4.8 | 4.9 | 6.0 | 6,0 | 7,6 |
| Al₂O₃ | 4.2 | 8.6 | 8.7 | 2.0 | 2 | 12.0 | 12,0 | 4,2 |
| Na₂O | 28.3 | 17.3 | | | | 15.0 | 16.0 | 28,3 |
| K₂O | 12.4 | 17.3 | 17.3 | | | 18.0 | 19.0 | 12,4 |
| PbO | | | | | | 9.0 | | |
| BaO | | 8.7 | 8.7 | 15.4 | 14 | | | |
| Li₂O | | | 17,3 | 34,6 | 42,1 | | | |
| Bi₂O₃ | | | | | | | 5 | 1 |
| Halbkugel Temperatur(°C) | 513 | 554 | 564 | 540 | 625 | | 553 | 502 |
| α(20-300° C) (10⁻⁶/K) | 19 | 16,5 | 14,9 | 13,7 | 14,8 | 16.7 | 16,0 | 19,8 |
| Tg (°C) | 325 | 375 | 354 | 369 | 359 | 392 | 425 | 347 |
| Dichte [g/cm³] | 2,56 | | | | | 3 | 3,02 | 2,63 |
| Auslaugung In Ma-% | 18,7 | 14,11 | 7,66 | 12,63 | 1,47 | 3,7 | 29,01 | 8,43 |
| Gewichtsverlust(%) nach 70h in 70°C-Wasser | 10,7 | 0,37 | 0,1 | 0,13 | 0,13 | n.B. | 0,006/0,001 | 0.45/0,66 |

Neben den Auslaugungen wurden auch die Wasserbeständigkeiten der einzelnen Gläser bestimmt.

Die Wasserbeständigkeitstests sind so erfolgt, dass Niederschmelzungen von den Gläsern gemacht wurden (2x2 cm, Höhe: ∼0.5 cm), die in 200 ml Wasser bei 25° C und 70° C 70 Stunden eingelagert wurden. Danach wurde der Materialverlust in Gew.% bestimmt. Und in der Tabelle angegeben.

### Beispiel 1 (nicht im Sinne der Erfindung)

(AB1) in Tabelle 1 ist insbesondere für Aluminium/Aluminium-Einglasungen geeignet, d.h. Einglasungen eines Aluminiumstiftes als Leiter in einen umgebenden Aluminium-Grundkörper.

### Beispiel 6 (nicht im Sinne der Erfindung)

In Tabelle 1 ist insbesondere für Cu/Al-Einglasungen geeignet, d.h. Einglasung eines Kupferstiftes als Leiter in einen umgebenden Aluminium-Grundkörper.

Obwohl einige der Ausführungsbeispiele einen für die Fügung mit Cu tendenziell zu niedrigen Ausdehnungskoeffizienten aufweisen, wird deutlich, dass hohe Li-Anteile in der Schmelze gelöst werden können, ohne dass das Glas mit einer derartigen Glaszusammensetzung instabil wird.

Die Ausführungsbeispiele 7 und 8 (AB7 und AB8) zeichnen sich dadurch aus, dass sie Bi₂O₃ z. B. anstelle von PbO, wie in Beispiel 6 (nicht im Sinne der Erfindung) (AB6), enthalten.

Überraschenderweise hat sich gezeigt, dass durch Bi₂O₃ die Wasserbeständigkeit deutlich erhöht werden kann. Durch die Einführung von 1 mol-% Bi₂O₃ konnte beispielsweise eine 10-fach höhere Wasserbeständigkeit beim Ausführungsbeispiel 8 (AB8) gegenüber Beispiel 1 (nicht im Sinne der Erfindung) (AB1) erzielt werden, bei im wesentlichen gleichem Alkaligehalt. Für den Fachmann ist dies überraschend.

Bi₂O₃ kann insbesondere auch anstelle von PbO gemäß Beispiel 6 (nicht im Sinne der Erfindung) (AB6) verwandt werden. Da Blei umweltschädlich ist, ist sind Glaszusammensetzungen besonders bevorzugt, die bis auf Verunreinigungen frei von PbO sind, d.h. bei denen PbO zu 0 mol-% gesetzt werden kann. Frei bis auf Verunreinigungen heißt in dieser Anmeldung, dass weniger als 100 ppm, bevorzugt weniger als 10 ppm, insbesondere weniger als 1 ppm des jeweiligen Stoffes, beispielsweise Blei in dem Glas enthalten sind.

In der nachfolgenden Tabelle 2 sind herkömmliche Glaszusammensetzungen (VB1-VB9) angegeben, die im Vergleich zu den zuvor genannten erfindungsgemäßen Ausführungsbeispielen AB1 und AB8 untersucht wurden.

In Tabellen 1 und 2 ist die Zusammensetzung in mol-% angegeben, die Transformationstemperatur Tg, wie Sie beispielsweise in "Schott Guide to Glass, second edition, 1996, Chapman&Hall, Seiten 18-21 definiert ist, die Gesamtauslaugung in Massenprozent (Ma -%) angegeben, der Ausdehnungskoeffizient α in 10⁻⁶K⁻¹ im Bereich 20°C - 300°C sowie die Dichte in g/cm³ Die Gesamtauslaugung wird wie im einleitenden Teil beschrieben bestimmt, d. h. die Glaszusammensetzungen wurden zu Glaspulver mit einer Körnung d50 = 10µm gemahlen, für eine Woche dem Elektrolyten bestehend aus Ethylencarbonat/Dimethylcarbonat im Verhältnis 1:1 mit darin gelöstem 1 molaren LiPF₆ als Leitsalz ausgesetzt und nach dieser Zeit der Elektrolyt bestehend aus Ethylcarbonat/Dimethylcarbonat im Verhältnis 1:1 mit darin gelösten 1 molaren LiPF₆ als Leitsalz auf Glasbestandteile, die aus dem Glas ausgelaugt wurden, untersucht. In Tabelle 1 bezeichnet n. b. nicht bekannte Eigenschaften.

**Tabelle 2: Vergleichsbeispiele**

| | | VB 1 | VB 2 | VB 3 | VB 4 | VB 5 | VB 6 | VB 7 | VB 8 | VB 9 | | | |
|---|---|---|---|---|---|---|---|---|---|---|---|---|---|
| System | | SiO2 | SiO2 | SiO2 | SiO2 | P2O5 | P2O5 | P2O5 | P2O5 | P2O5 | | | |
| | | | | | | | | | | | | | |
| Zusammensetzung [mol-%] | | | | | | | | | | | | | |
| SiO₂ | | 66,5 | 66,6 | 63,3 | 77,8 | | 55,4 | | 2,6 | | | | |
| ZrO₂ | | | | 2,4 | | | 11,8 | | | | | | |
| Al₂O₃ | | 9,3 | 10,4 | 1,0 | 3,3 | 8,4 | 5,5 | 12,8 | 4,0 | 7,4 | | | |
| B₂O₃ | | 4,0 | 7,3 | 4,1 | 9,4 | | | 31,2 | 1,7 | | | | |
| mgO | | 4,0 | 4,4 | 3,3 | | 4,3 | 20,5 | | 2,9 | | | | |
| BaO | | 3,8 | 1,5 | 2,5 | 0,2 | 7,0 | | | 7,8 | | | | |
| La2O3 | | | | | | | 1,3 | | | | | | |
| Li₂O | | | | 0,6 | | | | | | | | | |
| K₂O | | | | 7,9 | | | 2,0 | | 2,4 | | | | |
| P₂O₅ | | | | | | 5,3 | 6,8 | 29,3 | 59,7 | 50,5 | | | |
| CaO | | 12,3 | 9,6 | 4,7 | 1,6 | 7,9 | | | 8,1 | | | | |
| Na₂O | | | | 9,1 | 7,0 | | | | 0,5 | | | | |
| SrO | | | | | | 11,3 | | | | | | | |
| F | | | | 1,0 | 0,6 | 54,7 | | | | | | | |
| PbO | | | | | | | | | | | | | |
| SnO | | | | | | | | 27,0 | | 42,2 | | | |
| ZnO | | | | | | | | | 8,9 | | | | |
| | | | | | | | | | | | | | |
| Tg | | 720 | 716 | 508 | 562 | 464 | 680 | n.b. | 462 | n.b. | | | |
| Gesamtauslaugung in Ma.-% | | 43,5 | 52,4 | 167,0 | 64,4 | 2,1 | 127,6 | 50,2 | 18,8 | 1,9 | | | |
| α (20° C - 300° C) | | 4,6 | 3,8 | 10,4 | 4,9 | 14,8 | 5,5 | n.b. | n.b. | n.b. | | | |
| Dichte [g/cm³] | | 2,6 | 2,5 | n.b. | 2,3 | 3,7 | 2,8 | n.b. | 2,8 | n.b. | | | |

Die in Tabelle 2 angegebenen Vergleichsbeispiele VB1, VB2 und VB6 zeigen eine zu hohe Transformationstemperaturen Tg und zu niedrige thermische Ausdehnungskoeffizienten α gegenüber den Zusammensetzungen gemäß Ausführungsbeispielen AB7 und AB8. Vergleichsbeispiel VB3 hat zwar einen genügend niedrigen Tg, einen besseren - aber nicht ausreichenden Ausdehnungskoeffizient α im Bereich 20° C bis 300° C - aber eine hohe Instabilität gegenüber dem Batterielektrolyten. Vergleichsbeispiel VB4 besitzt einen günstigen Tg, aber die Beständigkeit und der Ausdehnungskoeffizient α sind nicht ausreichend. Vergleichsbeispiel VB5 hat eine hervorragende Beständigkeit, der Tg ist zufriedenstellend, aber der Ausdehnungskoeffizient α ist nicht ausreichend.

Überraschender Weise zeigen die Ausführungsbeispiele AB7 und AB8 gemäß Tabelle 1 eine erfindungsgemäß hohen Ausdehnungskoeffizienten α, niedriges Tg und eine hohe chemische Beständigkeit im erfindungsgemäßen Zusammensetzungsbereich gemäß Anspruch 1. Die erfindungsgemäßen Glaszusammensetzungen stellen somit Verschmelzgläser beziehungsweise Schmelzgläser beziehungsweise Lotgläser für Batteriedurchführungen zur Verfügung, mit einer geringen Prozesstemperatur, einer Verschmelztemperatur, die geringer als der Schmelzpunkt von Leichtmetall, insbesondere Aluminium ist, einem hohen Ausdehnungskoeffizient α und einer hervorragenden Beständigkeit gegenüber Batterielektrolyten.

Mit der vorliegenden Erfindung wird erstmals eine Durchführung für ein Gehäuse, insbesondere ein Batteriezellengehäuse, bevorzugt für eine Lithium-Ionen-Batterie, angegeben, die dafür geeignet ist, in Gehäuseteile von Batteriezellengehäusen, bestehend aus einem Leichtmetall, insbesondere Aluminium (Al), eine Aluminiumlegierung, Magnesium, eine Magnesiumlegierung, Titan oder einer Titanlegierung eingesetzt zu werden. Es sind aber als Materialien für das Batteriezellengehäuse auch Stahl oder Edelstahl, insbesondere Nirosta-Edelstahl möglich. In einem solchen Fall werden die Materialien des stiftförmigen Leiters mit Kopfteil und gegebenenfalls der Grundkörpers entsprechend ausgewählt und angepasst.

Mit dem Durchführungsbauteil gemäß der Erfindung kann ein Batteriegehäuse zur Verfügung gestellt werden, das hermetisch dicht ist auch bei einer Verformung des Batteriegehäuses im Gegensatz zu Kunststoffdurchführungen, die zur Rissbildung neigen. Hierdurch wird bei Batterien mit Batteriegehäusen, die eine erfindungsgemäße Durchführung aufweisen, insbesondere eine hohe Feuerbeständigkeit bei Fahrzeugunfällen zur Verfügung gestellt. Dies ist insbesondere bei einem Einsatz von Batterien, bevorzugt Li-Ionen-Batterien im Automobilbereich von Bedeutung.

## Patentansprüche

1. Durchführung, insbesondere Batteriedurchführung, insbesondere für eine Lithium-Ionen-Batterie, bevorzugt einen Lithium-Ionen-Akkumulator mit wenigstens einem Grundkörper, der wenigstens eine Öffnung aufweist, durch die wenigstens ein Leiter, insbesondere ein im Wesentlichen stiftförmiger Leiter in einem Glasmaterial hindurchgeführt wird, wobei der Grundkörper, bevorzugt ein niedrig schmelzendes Material, insbesondere ein Leichtmetall, bevorzugt Aluminium, Magnesium, AlSiC, eine Aluminiumlegierung oder eine Magnesiumlegierung, Titan, eine Titanlegierung oder Stahl, insbesondere Edelstahl, nicht rostender Stahl oder Werkzeugstahl, umfasst und das Glasmaterial die nachfolgenden Komponenten in mol-% umfasst:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%, insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 1-5 mol-%, ganz bevorzugt 2-5 mol-% |

2. Durchführung nach Anspruch 1,
**dadurch gekennzeichnet, dass**
die Glaszusammensetzung die nachfolgenden Komponenten in mol-% umfasst.
| | |
|---|---|
| P₂O₅ | 38-50 mol.-%, insbesondere 39-48 mol-% |
| Al₂O₃ | 3-14 mol.-%, insbesondere 4-12 mol-% |
| B₂O₃ | 4-10 mol.-%, insbesondere 4-8 mol-% |
| Na₂O | 10-30 mol.-%, insbesondere 14-20 mol-% |
| K₂O | 10-20 mol.-%, insbesondere 12-19 mol-% |

3. Durchführung nach Anspruch 1 oder 2,
**dadurch gekennzeichnet, dass**
der Leiter, insbesondere im Wesentlichen stiftförmige Leiter insbesondere ein Metall, bevorzugt Kupfer, CuSiC, Aluminium, AlSiC, Magnesium, Silber, Gold, Aluminiumlegierungen, Magnesiumlegierungen, Kupferlegierungen, Silberlegierungen, Goldlegierungen, NiFe-Legierungen umfasst.

4. Durchführung nach einem der Ansprüche 1 bis 3,
**dadurch gekennzeichnet, dass**
das Glasmaterial einen Ausdehnungskoeffizienten α im Bereich 20° C bis 300°C > 14·10⁻⁶ /K, bevorzugt im Bereich 15 · 10⁻⁶ /K bis 25 · 10⁻⁶ /K aufweist.

5. Durchführung nach einem der Ansprüche 1 bis 4,
**dadurch gekennzeichnet, dass**
das Glasmaterial Zusatzstoffe, die im Bereich eines Emissionsmaxiums von Infrarotstrahlung liegen, insbesondere Fe, Cr, Co, V umfasst.

6. Durchführung nach einem der Ansprüche 1 bis 5,
**dadurch gekennzeichnet, dass**
das Glasmaterial unter Normalatmosphäre mit dem Grundkörper und/oder dem Leiter verschmelzbar ist, insbesondere ein Al-Grundkörper mit einem Leiter aus Al verlötbar ist.

7. Durchführung nach einem der Ansprüche 1 bis 6,
**dadurch gekennzeichnet, dass**
das Glasmaterial eine hohe chemische Beständigkeit gegenüber nicht wässrigen Batterieelektrolyten, insbesondere gegenüber Carbonaten, bevorzugt Carbonatmischungen mit einem Leitsalz, bevorzugt umfassend LiPF₆ aufweist.

8. Elektrische Speichereinrichtung, insbesondere Batterie, bevorzugt Lithium-Ionen-Batterie, bevorzugt Lithium-Ionen-Akkumulator mit einem Gehäuse, wobei in das Gehäuse eine Durchführung nach einem der Ansprüche 1 bis 7 eingebracht ist.

9. Elektrische Speichereinrichtung gemäß Anspruch 8,
**dadurch gekennzeichnet, dass**
die elektrische Speichereinrichtung, insbesondere Batterie, einen nicht wässrigen Elektrolyten, insbesondere ein Carbonat, bevorzugt eine Carbonatmischung, die insbesondere bevorzugt Ethylencarbonat und Dimethylcarbonat umfasst, mit einem Leitsalz, insbesondere in Form von LiPF₆ umfasst.

10. Elektrische Speichereinrichtung nach einem der Ansprüche 8 bis 9
**dadurch gekennzeichnet, dass**
der Grundkörper ein Metall, Edelstahl, Stahl, nichtrostenden Stahl, ein Leichtmetall, insbesondere Aluminium, AlSiC, eine Aluminiumlegierung, Magnesium, eine Magnesiumlegierung, Titan oder eine Titanlegierung umfasst.

11. Elektrische Speichereinrichtung nach einem der Ansprüche 8 bis 10,
**dadurch gekennzeichnet, dass**
das Gehäuse ein Metall, Edelstahl, Stahl, nichtrostenden Stahl, ein Leichtmetall insbesondere Aluminium, AlSiC, eine Aluminiumlegierung, Magnesium, eine Magnesiumlegierung, Titan oder eine Titanlegierung umfasst.

12. Verwendung einer Glaszusammensetzung, umfassend die nachfolgenden Komponenten in mol-%:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 1-5 mol-%, ganz bevorzugt 2-5 mol-% |
zur Durchführung eines Leiters in das Gehäuse einer elektrischen Speichereinrichtung, bevorzugt einer Batterie, insbesondere einer Lithium-Ionen-Batterie, bevorzugt eines Lithium-Ionen-Akkumulators, wobei die elektrische Speichereinrichtung, insbesondere Batterie einen nicht wässrigen Elektrolyten, bevorzugt ein Carbonat, insbesondere einer Carbonatmischung mit einem Leitsalz, bevorzugt LiPF₆, umfasst.

13. Verwendung nach Anspruch 12,
**dadurch gekennzeichnet, dass**
die Glaszusammensetzung umfasst:
| | |
|---|---|
| P₂O₅ | 38-50 mol-%, insbesondere 39-48 mol-% |
| Al₂O₃ | 3-14 mol-%, insbesondere 4-12 mol-% |
| B₂O₃ | 4-10 mol-%, insbesondere 5-8 mol-% |
| Na₂O | 10-30 mol-%, insbesondere 14-20 mol-% |
| K₂O | 10-20 mol-%, insbesondere 12-19 mol-% |

14. Verwendung nach Anspruch 12 oder 13,
**dadurch gekennzeichnet, dass**
der Leiter, insbesondere ein Metall, bevorzugt Aluminium, AlSiC, Kupfer,CuSiC, Magnesium, Silber, Gold, eine Aluminiumlegierung, eine Magnesiumlegierung, eine Kupferlegierung, eine Silberlegierung, eine Goldlegierung oder NiFe-Legierungen und/oder der Grundkörper ein Leichtmetall, Edelstahl, Stahl, nichtrostenden Stahl, insbesondere Aluminium, AlSiC, eine Aluminiumlegierung, Magnesium, eine Magnesiumlegierung, Titan oder eine Titanlegierung umfasst.

## Claims

1. A feed-through, in particular battery feed-through, in particular for a lithium-ion battery, preferably a lithium iron accumulator, comprising at least one base body, which has at least one opening, through which at least one conductor, in particular a substantially pin-shaped conductor is guided in a glass material, wherein the base body comprises, preferably, a low-melting material, in particular a light metal, preferably aluminium, magnesium, AlSiC, an aluminium alloy or a magnesium alloy, titanium, a titanium alloy or steel, in particular stainless steel, rust-resistant steel or tool steel, and the glass material comprises the following components in mol-%:
| | |
|---|---|
| P₂O₅ | 35-50 mol-%, in particular 39-48 mol-% |
| Al₂O₃ | 0-14 mol-%, in particular 2-12 mol-% |
| B₂O₃ | 2-10 mol-%, in particular 4-8 mol-% |
| Na₂O | 0-30 mol-%, in particular 0-20 mol-% |
| M₂O | 0-20 mol-%, in particular 12-20 mol-%, wherein M can be K, Cs, Rb |
| PbO | 0-10 mol-%, in particular 0-9 mol-% |
| Li₂O | 0-45 mol-%, in particular 0-40 mol-%, particularly preferably 17-40 mol-% |
| BaO | 0-20 mol-%, in particular 0-20 mol-%, particularly preferably 5-20 mol-% |
| Bi₂O₃ | 1-5 mol-%, particularly preferably 2-5 mol-% |

2. A feed-through according to claim 1,
**characterised in that**
the glass composition comprises the following components in mol-%.
| | |
|---|---|
| P₂O₅ | 38-50 mol-%, in particular 39-48 mol-% |
| Al₂O₃ | 3-14 mol-%, in particular 4-12 mol-% |
| B₂O₃ | 4-10 mol-%, in particular 4-8 mol-% |
| Na₂O | 10-30 mol-%, in particular 14-20 mol-% |
| K₂O | 10-20 mol-%, in particular 12-19 mol-% |

3. A feed-through according to claim 1 or 2,
**characterised in that**
the conductor, in particular the substantially pin-shaped conductor, comprises, in particular, a metal, preferably copper, CuSiC, aluminium, AlSiC, magnesium, silver, gold, aluminium alloys, magnesium alloys, copper alloys, silver alloys, gold alloys, NiFe alloys.

4. A feed-through according to one of claims 1 to 3,
**characterised in that**
the glass material has an expansion coefficient α in the range 20° C to 300°C > 14·10⁻⁶ /K, preferably in the range 15 · 10⁻⁶/K to 25 · 10⁻⁶/K.

5. A feed-through according to one of claims 1 to 4,
**characterised in that**
the glass material comprises additives which lie in the range of an emission maximum of infrared radiation, in particular Fe, Cr, Co, V.

6. A feed-through according to one of claims 1 to 5,
**characterised in that**
the glass material can be fused at normal atmosphere with the base body and/or the conductor, in particular an Al base body can be soldered with a conductor made of Al.

7. A feed-through according to one of claims 1 to 6,
**characterised in that**
the glass material has a high chemical resistance to the non-aqueous battery electrolytes, in particular to carbonates, preferably carbonate mixtures comprising a conductive salt, preferably comprising LiPF₆.

8. An electrical storage device, in particular battery, preferably lithium-ion battery, preferably lithium-ion accumulator, comprising a housing, wherein a feedthrough according to one of claims 1 to 7 is introduced into the housing.

9. An electrical storage device according to claim 8,
**characterised in that**
the electrical storage device, in particular battery, comprises a non-aqueous electrolyte, in particular a carbonate, preferably a carbonate mixture, which, in particular, preferably comprises ethylene carbonate and dimethyl carbonate, with a conductive salt, in particular in the form of LiPF₆.

10. An electrical storage device according to one of claims 8 to 9, **characterised in that**
the base body comprises a metal, stainless steel, steel, rust-resistant steel, a light metal, in particular aluminium, AlSiC, an aluminium alloy, magnesium, a magnesium alloy, titanium or a titanium alloy.

11. An electrical storage device according to one of claims 8 to 10,
**characterised in that**
the housing comprises a metal, stainless steel, steel, rust-resistant steel, a light metal, in particular aluminium, AlSiC, an aluminium alloy, magnesium, a magnesium alloy, titanium or a titanium alloy.

12. Use of a glass composition, comprising the following components in mol-%:
| | |
|---|---|
| P₂O₅ | 35-50 mol-%, in particular 39-48 mol-% |
| Al₂O₃ | 0-14 mol-%, in particular 2-12 mol-% |
| B₂O₃ | 2-10 mol-%, in particular 4-8 mol-% |
| Na₂O | 0-30 mol-%, in particular 0-20 mol-% |
| M₂O | 0-20 mol-%, in particular 12-20 mol-%, wherein M can be K, Cs, Rb |
| PbO | 0-10 mol-%, in particular 0-9 mol-% |
| Li₂O | 0-45 mol-%, in particular 0-40 mol-%, particularly preferably 17-40 mol-% |
| BaO | 0-20 mol-%, in particular 0-20 mol-%, particularly preferably 5-20 mol-% |
| Bi₂O | 1-5 mol-%, particularly preferably 2-5 mol-% |
for feeding through a conductor into the housing of an electrical storage device, preferably of a battery, in particular of a lithium-ion battery, preferably of a lithium-ion accumulator, wherein the electrical storage device, in particular battery, comprises a non-aqueous electrolyte, preferably a carbonate, in particular a carbonate mixture with a conductive salt, preferably LiPF₆.

13. Use according to claim 12,
**characterised in that**
the glass composition comprises:
| | |
|---|---|
| P₂O₅ | 38-50 mol-%, in particular 39-48 mol-% |
| Al₂O₃ | 3-14 mol-%, in particular 4-12 mol-% |
| B₂O₃ | 4-10 mol-%, in particular 5-8 mol-% |
| Na₂O | 10-30 mol-%, in particular 14-20 mol-% |
| K₂O | 10-20 mol-%, in particular 12-19 mol-% |

14. Use according to claim 12 or 13, **characterised in that**
the conductor comprises, in particular, a metal, preferably aluminium, AlSiC, copper, CuSiC, magnesium, silver, gold, and aluminium alloy, a magnesium alloy, a copper alloy, a silver alloy, a gold alloy or NiFe alloys and/or the base body comprises a light metal, stainless steel, steel, rust-resistant steel, in particular aluminium, AlSiC, an aluminium alloy, magnesium, a magnesium alloy, titanium or a titanium alloy.

## Revendications

1. Traversée, en particulier traversée pour batterie et notamment pour batterie lithium-ion, de préférence pour accumulateur lithium-ion, ayant au moins un corps de base présentant au moins une ouverture à travers laquelle passe un ou plusieurs conducteurs, en particulier un conducteur sensiblement en forme de tige, en matériau vitreux, le corps de base comprenant de préférence un matériau à point de fusion bas, en particulier un métal léger, de préférence l'aluminium, le magnésium, l'AlSiC, un alliage d'aluminium ou un alliage de magnésium, le titane, un alliage de titane ou l'acier, en particulier l'acier de qualité supérieure, l'acier inoxydable ou l'acier d'outillage et le matériau vitreux comprenant les composants suivants (en % en moles), à savoir :
| | |
|---|---|
| P₂O₅ | 35 à 50 % en moles, en particulier 39 à 48 % en moles |
| Al₂O₃ | 0 à 14 % en moles, en particulier 2 à 12 % en moles |
| B₂O₃ | 2 à 10 % en moles, en particulier 4 à 8 % en moles |
| Na₂O | 0 à 30 % en moles, en particulier 0 à 20 % en moles |
| M₂O | 0 à 20 % en moles, en particulier 12 à 20 % en moles, avec possibilité que M=K, Cs, Rb |
| PbO | 0 à 10 % en moles, en particulier 0 à 9 % en moles |
| Li₂O | 0 à 45 % en moles, en particulier 0 à 40 % en moles, de manière particulièrement préférée 17 à 40 % en moles |
| BaO | 0 à 20 % en moles, en particulier 0 à 20 % en moles, de manière particulièrement préférée 5 à 20 % en moles |
| Bi₂O₃ | 1 à 5 % en moles, de manière particulièrement préférée 2 à 5 % en moles |

2. Traversée selon la revendication 1,
**caractérisée en ce que**
la composition vitreuse comprend les composants suivants (en % en moles), à savoir :
| | |
|---|---|
| P₂O₅ | 38 à 50 % en moles, en particulier 39 à 48 % en moles |
| Al₂O₃ | 3 à 14 % en moles, en particulier 4 à 12 % en moles |
| B₂O₃ | 4 à 10 % en moles, en particulier 4 à 8 % en moles |
| Na₂O | 10 à 30 % en moles, en particulier 14 à 20 % en moles |
| K₂O | 10 à 20 % en moles, en particulier 12 à 19% en moles |

3. Traversée selon la revendication 1 ou 2,
**caractérisée en ce que**
le conducteur, en particulier le conducteur sensiblement en forme de tige, comprend en particulier un métal, de préférence le cuivre, le CuSiC, l'aluminium, l'AlSiC, le magnésium, l'argent, l'or, les alliages d'aluminium, les alliages de magnésium, les alliages de cuivre, les alliages d'argent, les alliages d'or, les alliages de NiFe.

4. Traversée selon l'une des revendications 1 à 3,
**caractérisée en ce que**
le matériau vitreux présente un coefficient de dilatation α dans la plage de 20 °C à 300 °C > 14·10⁻⁶ /K, de préférence dans la plage de 15 · 10⁻⁶/K à 25 ·10⁻⁶/K.

5. Traversée selon l'une des revendications 1 à 4,
**caractérisée en ce que**
le matériau vitreux comprend des additifs se situant dans la zone du maximum d'émission de rayonnement infrarouge, en particulier Fe, Cr, Co, V.

6. Traversée selon l'une des revendications 1 à 5,
**caractérisée en ce que**
le matériau vitreux peut être fondu, sous atmosphère normale, avec le corps de base et/ou le conducteur, en particulier **en ce qu'**un corps de base en Al peut être soudé à un conducteur en Al.

7. Traversée selon l'une des revendications 1 à 6,
**caractérisée en ce que**
le matériau vitreux présente une grande résistance chimique vis-à-vis des électrolytes de batterie non aqueux, en particulier vis-à-vis des carbonates, en particulier des mélanges de carbonates avec un sel conducteur, comprenant de préférence du LiPF₆.

8. Moyen de stockage électrique, en particulier une batterie, de préférence une batterie lithium-ion, de préférence un accumulateur lithium-ion, muni d'un boîtier, une traversée selon l'une des revendications 1 à 7 étant introduite dans le boîtier.

9. Moyen de stockage électrique selon la revendication 8,
**caractérisé en ce que**
le moyen de stockage électrique, en particulier une batterie, comprend un électrolyte non aqueux, en particulier un carbonate, de préférence un mélange de carbonates comprenant de manière particulièrement préférée du carbonate d'éthylène et du carbonate de diméthyle, avec un sel conducteur, en particulier sous forme de LiPF₆.

10. Moyen de stockage électrique selon l'une des revendications 8 à 9,
**caractérisé en ce que**
le corps de base comprend un métal, de l'acier de qualité supérieure, de l'acier, de l'acier inoxydable, un métal léger, en particulier l'aluminium, l'AlSiC, un alliage d'aluminium, le magnésium, un alliage de magnésium, le titane ou un alliage de titane.

11. Moyen de stockage électrique selon l'une des revendications 8 à 10,
**caractérisé en ce que**
le boîtier comprend un métal, de l'acier de qualité supérieure, de l'acier, de l'acier inoxydable, un métal léger, en particulier l'aluminium, l'AlSiC, un alliage d'aluminium, le magnésium, un alliage de magnésium, le titane ou un alliage de titane.

12. Utilisation d'une composition vitreuse comprenant les composants suivants (en % en moles), à savoir :
| | |
|---|---|
| P₂O₅ | 35 à 50 % en moles, en particulier 39 à 48 % en moles |
| Al₂O₃ | 0 à 14 % en moles, en particulier 2 à 12 % en moles |
| B₂O₃ | 2 à 10 % en moles, en particulier 4 à 8 % en moles |
| Na₂O | 0 à 30 % en moles, en particulier 0 à 20 % en moles |
| M₂O | 0 à 20 % en moles, en particulier 12 à 20 % en moles, avec possibilité que M=K, Cs, Rb |
| PbO | 0 à 10 % en moles, en particulier 0 à 9 % en moles |
| Li₂O | 0 à 45 % en moles, en particulier 0 à 40 % en moles, de manière particulièrement préférée 17 à 40 % en moles |
| BaO | 0 à 20 % en moles, en particulier 0 à 20 % en moles, de manière particulièrement préférée 5 à 20 % en moles |
| Bi₂O₃ | 1 à 5 % en moles, de manière particulièrement préférée 2 à 5 % en moles |
pour faire passer un conducteur dans le boîtier d'un moyen de stockage électrique, de préférence une batterie, en particulier une batterie lithium-ion, de préférence un accumulateur lithium-ion, le moyen de stockage électrique, en particulier une batterie, comprenant un électrolyte non aqueux, de préférence un carbonate, en particulier un mélange de carbonates avec un sel conducteur, de préférence du LiPF₆.

13. Utilisation selon la revendication 12,
**caractérisée en ce que**
la composition vitreuse comprend :
| | |
|---|---|
| P₂O₅ | 38 à 50 % en moles, en particulier 39 à 48 % en moles |
| Al₂O₃ | 3 à 14 % en moles, en particulier 4 à 12% en moles |
| B₂O₃ | 4 à 10 % en moles, en particulier 5 à 8 % en moles |
| Na₂O | 10 à 30 % en moles, en particulier 14 à 20 % en moles |
| K₂O | 10 à 20 % en moles, en particulier 12 à 19 % en moles |

14. Utilisation selon la revendication 12 ou 13,
**caractérisée en ce que**
le conducteur comprend en particulier un métal, de préférence l'aluminium, l'AlSiC, le cuivre, le CuSiC, le magnésium, l'argent, l'or, un alliage d'aluminium, un alliage de magnésium, un alliage de cuivre, un alliage d'argent, un alliage d'or ou des alliages de NiFe et/ou le corps de base comprend un métal léger, de l'acier de qualité supérieure, de l'acier, de l'acier inoxydable, en particulier l'aluminium, l'AlSiC, un alliage d'aluminium, le magnésium, un alliage de magnésium, le titane ou un alliage de titane.
